# EUROPÄISCHE PATENTSCHRIFT

(11) **EP 1 431 135 B1**
(45) Veröffentlichungstag und Bekanntmachung des Hinweises auf die Patenterteilung: **25.05.2005**
(21) Anmeldenummer: 03028604.1
(22) Anmeldetag: 12.12.2003
(51) Int. Cl.: B60R 21/34

(54) **Kraftfahrzeug mit anhebbarer Fronthaube**
Vehicle with a liftable bonnet
Véhicule automobile avec capot soulevable

(30) Priorität: 16.12.2002 DE 10258627
(43) Veröffentlichungstag der Anmeldung: 23.06.2004
(73) Patentinhaber: DaimlerChrysler AG, 70567 Stuttgart (DE)
(72) Erfinder: Jocher, Reiner, 71134 Aidlingen (DE)

(56) Entgegenhaltungen:
- EP-A- 0 509 690
- US-A- 5 697 467
- PATENT ABSTRACTS OF JAPAN vol. 008, no. 061 (M-284), 23. März 1984 (1984-03-23) -& JP 58 211975 A (NISSAN JIDOSHA KK), 9. Dezember 1983 (1983-12-09)

## Beschreibung

Die Erfindung betrifft ein Kraftfahrzeug, insbesondere einen Personenkraftwagen, mit den Merkmalen des Oberbegriffs des Anspruchs 1.

Aus der Praxis sind zahlreiche Sicherheitseinrichtungen, wie z.B. Airbags und dergleichen, für Fahrzeuginsassen bekannt. Von erhöhtem Interesse sind auch Schutzmaßnahmen für Fußgänger oder Radfahrer, die bei einem Unfall von einer Frontpartie eines Personenkraftwagens erfasst werden. Besonders problematisch erweisen sich hierbei Unfälle mit Fußgängern die bei geringen Geschwindigkeiten erfolgen, da der Fußgänger, wenn er frontal erfasst wird, oft mit dem Kopf auf die Motorhaube des Personenkraftwagens aufschlägt und sich dabei schwer verletzt. Es ist daher wünschenswert, die Unfallfolgen für einen Fußgängern zu reduzieren.

Aus der gattungsbildenden DE 692 26 655 T2 (EP-A-0 509 690) ist eine Motorhaubenvorrichtung bekannt, bei der die Motorhaube nahe ihrer Vorderkante über ein Scharnier mit einem Modul im Vorderteil des Fahrzeugs verbunden ist, das seinerseits über ein weiteres Scharnier an der Karosserie des Fahrzeugs gelagert ist. Das Ausschwenken des Vorderteils bewirkt dann, dass sich die Motorhaube entgegen der Fahrtrichtung nach hinten bewegt, wobei eine Vorrichtung eine hintere Kante der Motorhaube nach oben verstellt. Bei einem Aufprall eines Fußgängers wird somit die Motorhaube des Fahrzeugs angehoben und dadurch zusätzlicher Deformationsweg geschaffen, wodurch sich das Verletzungsrisiko für den Fußgängers reduziert.

Aus der US 5,697,467 ist eine Motorhaubenanordnung eines Kraftfahrzeugs bekannt, welche insbesondere bei einem Aufprall eines Fußgängers von einer Normalstellung nach hinten und/oder nach oben in eine Ausweichstellung verstellbar ist. Im geschlossenen Zustand stützt sich die Motorhaube an einem in Fahrtrichtung gesehenen vorderen Endbereich mit einer Stützeinrichtung nach unten an einer Fahrzeugkarosserie ab, wobei die Stützeinrichtung an ihrem unteren Endbereich um eine horizontal zur Fahrzeugslängsrichtung verlaufenden Schwenkachse an der Fahrzeugkarosserie schwenkverstellbar gelagert ist. Die Stützeinrichtung weist mehrere in der Art von Pendelstützen gelenkt miteinander verbundene Hebel auf, welche beim Aufprall eines Fußgängers derart zusammenwirken, dass sich der vordere Endbereich der Motorhaube nach hinten verstellt. An ihrem hinteren Endbereich ist die Fronthaube über eine Führungseinrichtung an der Fahrzeugkarosserie verstellbar gelagert, wobei ein zwischen zwei beweglichen Elementen der Führungseinrichtung angeordneter Scherzapfen gewährleistet, dass sich die Fronthaube erst ab einer bestimmten Kollisionskraft, d.h. erst beim Überschreiten der Scherkraft des Scherzapfens, nach hinten und oben in ihre Ausweichstellung verstellt.

Aus der DE 199 22 454 A1 ist eine Fronthaubenanordnung bekannt, bei der eine Fronthaube eines Fahrzeugs über ein Scharnier an einem Rahmen des Fahrzeugs angelenkt und über ein Haubenschloss verschließbar ist. Das Scharnier ist in einer geschlossenen Lage der Fronthaube verriegelt und mit Vorspannmitteln in Richtung auf eine angehobene Lage der Fronthaube vorgespannt. Bei einem Aufprall eines Fußgängers, der beispielsweise durch einen im Frontbereich des Kraftfahrzeugs angeordneten Sensor detektiert werden kann, wird das Scharnier entriegelt und die Vorspannmittel verstellen die Fronthaube aktiv in ihre angehobene Lage. Dabei bilden die Vorspannmittel zugleich energieabsorbierende Spannmittel, die Aufprallenergie in Spannenergie für die Spannmittel bzw. in Deformationsenergie der Fronthaube umsetzen.

Aus der DE 197 12 961 A1 ist eine Anordnung einer Frontklappe an einem Fahrzeug bekannt. Eine Scharniereinrichtung der hinten angeschlagenen Frontklappe ist über einen schwenkbar gelagerten Scharnierträger so an der Karosserie befestigt, dass im Fall einer Kollision des Fahrzeugs mit einem Fußgänger die Frontklappe über eine energiespeichernde Einrichtung nach oben verschwenkt werden kann. Kerngedanke ist hierbei, die Scharniereinrichtung selbst anzuheben, wodurch sich ein besonders einfacher Aufbau ergibt, ohne die Notwendigkeit einer Entkopplung von Scharniereinheit und Frontklappe. Eine fahrzeugvorderseitige Verriegelungseinrichtung, mit der die Frontklappe in ihrer geschlossenen Lage an der Karosserie fixiert ist, bildet im Fall der Fußgängerkollision eine vordere Drehachse, um die die Hinterkante der Frontklappe verschwenkt wird.

Es ist Aufgabe der vorliegenden Erfindung, eine verbesserte Ausführungsform einer Fronthaubenanordnung anzugeben, die insbesondere das Verletzungsrisiko für Fußgänger bei einem frontseitigen Aufprall auf das Fahrzeug reduzieren soll.

Diese Aufgabe wird durch den Gegenstand des unabhängigen Anspruchs gelöst, vorteilhafte Ausgestaltungen sind Gegenstand der abhängigen Ansprüche.

Die Erfindung beruht auf dem allgemeinen Gedanken, eine Stützeinrichtung, mit der sich eine Fronthaube in geschlossenem Zustand an einem bezüglich der Fahrtrichtung vorderen Endbereich nach unten an einer Fahrzeugkarosserie abstützt, knickbar auszubilden. Die Stützeinrichtung weist zu diesem Zweck wenigstens ein Knickgelenk auf. Das Knickgelenk ist mittels einer Betätigungseinrichtung von einem Sperrzustand, in dem es starr ist, in einen Freigabezustand überführbar, in dem es möglich ist, den vorderen Endbereich der entsprechend verstellbar an der Fahrzeugkarosserie gelagerten Fronthaube von einer Normalstellung in eine Ausweichstellung zu verstellen, welche sich in Fahrtrichtung hinter der Normalstellung befindet.

Das im Normalzustand gesperrte Knickgelenk versteift den vorderen Endbereich der Fronthaube, an dem beispielsweise eine Kühlerverkleidung angeordnet ist. Bei einer Kollision mit einem Fußgänger bewirkt die Betätigungseinrichtung ein Überführen des Knickgelenks vom Sperrzustand in den Freigabezustand und ermöglicht so ein Abknicken der Stützeinrichtung um die Knickachse. Durch die Kopplung der Stützeinrichtung über das Knickgelenk mit der Fronthaube des Fahrzeugs wird diese beim Abknicken der Stützeinrichtung mit ihrem vorderen Endbereich nach hinten verstellt. Gleichzeitig kann ein hinterer Endbereich der Fronthaube von der Normalstellung nach hinten und/oder oben in die Ausweichstellung verstellt werden, um so den Aufprallbereich insgesamt nachgiebiger zu gestalten. Die nachgiebige bzw. ausweichende Ausgestaltung des Frontbereichs des Kraftfahrzeugs reduziert unmittelbar die Unfallfolgen für Fußgänger bzw. Radfahrer bei einer Kollision mit dem Fahrzeug. Hierbei ist besonders wichtig, dass der vordere Endbereich der Fronthaube, welcher nach dem Verschwenken der Kühlerverkleidung und/oder des Scheinwerfers eine scharfe Kante mit einem hohen Verletzungsrisiko darstellt, aus der Gefahrenzone heraus bewegt wird.

Erfindungsgemäß weist das Knickgelenk einen steuerbaren elektomagnetischen Halter auf, der in einem ersten Schaltzustand den Sperrzustand des Knickgelenks und in einem zweiten Schaltzustand den Freigabezustand des Knickgelenks bewirkt. Während des normalen Betriebszustand des Fahrzeugs erfüllt die Stützeinrichtung eine wichtige Aufgabe, nämlich die Aussteifung des vorderen Endbereichs der Fronthaube. Ein unbeabsichtigtes Knicken der Stützeinrichtung ist daher zu vermeiden. Mittels des steuerbaren elektromagnetischen Halters, welcher das Knickgelenk im Sperrzustand hält, wird gewährleistet, dass das Knickgelenk nur beim Vorliegen vorbestimmter Randbedingungen, z.B. ab einer vorbestimmten, auf das Knickgelenk einwirkenden Kraft, die beispielsweise von einem Fußgänger ausgeübt werden kann, in den Freigabezustand überführt wird.

Eine besonders vorteilhafte Ausgestaltung der Erfindung ergibt sich, wenn ein Scheinwerfer oder eine Scheinwerferabdeckung oder eine Kühlerverkleidung des Fahrzeugs an ihrem jeweiligen unteren Endbereich um eine horizontale und quer zur Fahrzeuglängsrichtung verlaufende Schwenkachse an der Fahrzeugkarosserie schwenkbar gelagert sind. Hierdurch wird zusätzlicher Deformationsweg im Frontbereich des Fahrzeugs bereitgestellt. Zudem dämpft die nachgiebige Ausbildung oder Lagerung dieser Bauteile die Aufprallenergie und damit die Energie, die bei einer Kollision auf den Fußgänger einwirkt.

Gemäß einer bevorzugten Ausführungsform der Erfindung kann eine Antriebseinrichtung zum Verstellen der Fronthaube vorgesehen sein, die durch einen Schalter aktivierbar ist. Die Antriebseinrichtung verstellt aktiv die Fronthaube von der Normalstellung in die Ausweichstellung und kann beispielsweise ein Federelement aufweisen. Federelemente bieten den Vorteil, dass sie schlagartig den Verstellvorgang bewirken und damit der bei einer Kollision nur begrenzt zur Verfügung stehenden Reaktionszeit Rechnung tragen. Zudem sind Federelemente wartungsarm und kostengünstig herzustellen. Prinzipiell sind aber auch andere Antriebseinrichtungen, wie z.B. elektrische Motoren oder pneumatisch oder hydraulisch betriebene Kolben-Zylinder-Aggregate, denkbar.

Bei einer Weiterbildung kann vorgesehen sein, dass der Scheinwerfer und/oder die Scheinwerferabdeckung und/oder die Kühlerverkleidung beim Verschwenken den Schalter zur Ansteuerung der Antriebseinrichtung und/oder zur Ansteuerung des elektromagnetischen Halters betätigt. Dadurch kann bei einem Aufprall des Fußgängers auf das Fahrzeug die Fronthaube unabhängig von der Stelle des Aufpralls in die Ausweichstellung verstellt werden, wodurch sich die Unfallfolgen für den Fußgänger reduzieren.

Gemäß einer günstigen Weiterbildung der Erfindung sind Kontaktsensoren vorgesehen, die den Schalter zur Ansteuerung der Antriebseinrichtung und/oder zur Ansteuerung des Halters betätigen, wobei die Kontaktsensoren auch als Pre-Crash-Sensoren ausgebildet sein können. Die Verwendung solcher Kontaktsensoren und/oder Pre-Crash-Sensoren bewirkt bereits ein Verstellen der Fronthaube unmittelbar vor dem Aufprall des Fußgängers auf dieselbe. Günstig ist vor allem, dass keine Verstellkraft für die Scheinwerfer und/oder die Kühlerverkleidung beim Aufprall aufgebracht werden muss und somit die Verstellung der Scheinwerfer und/oder der Kühlerverkleidung sowie der Fronthaube auch bei geringer Aufprallkraft, wie sie beispielsweise von Kindern ausgeübt wird, sicher funktioniert.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

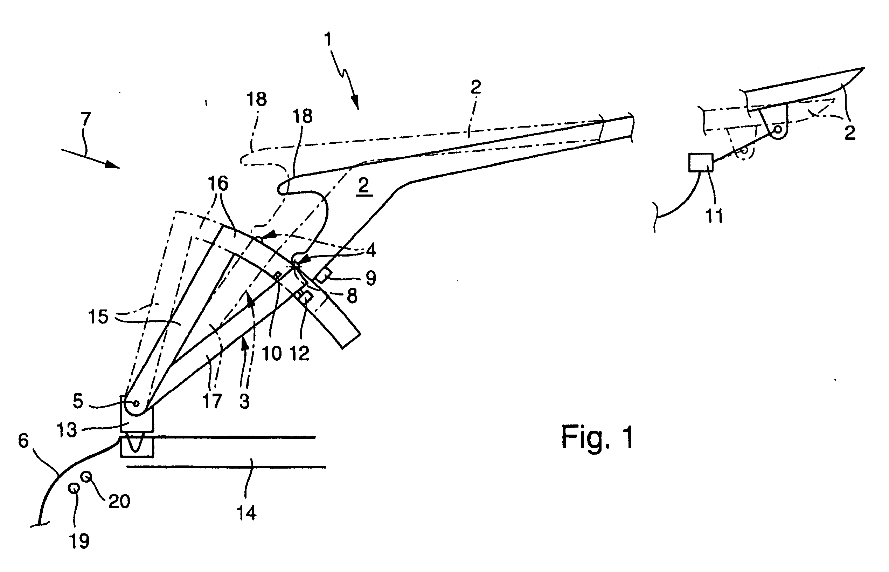

Die einzige Fig. 1 zeigt einen Längsschnitt durch einen Frontendbereich eines erfindungsgemäßen Kraftfahrzeugs.

Entsprechend Fig. 1 weist ein Frontendbereich 1 eines im übrigen nicht dargestellten Kraftfahrzeugs im wesentlichen eine Fronthaube 2, ein Karosserieteil 14 und eine zwischen der Fronthaube 2 und dem Karosserieteil 14 angeordnete Stützeinrichtung 3 auf. Die Fronthaube 2 stützt sich im geschlossenen Zustand an ihrem bezüglich der Fahrtrichtung vorderen Endbereich 18 über die Stützeinrichtung 3 nach unten an dem Karosserieteil 14 ab, wohingegen sie an ihrem bezüglich der Fahrtrichtung hinteren Endbereich von einer Normalstellung, welche in Fig. 1 mit unterbrochenen Linien dargestellt ist, nach hinten und/oder oben in eine Ausweichstellung, welche in Fig. 1 mit durchgezogenen Linien dargestellt ist, verstellbar gelagert ist. Diese Verstellbarkeit ist jedoch nur im Crashfall aktiv, während beim normalen Betriebszustand eine übliche Lagerung zum Öffnen und Schließen der Fronthaube 2 vorgesehen ist.

Die Stützeinrichtung 3 ist an ihrem unteren Bereich um eine horizontale und quer zur Fahrzeuglängsrichtung verlaufende Schwenkachse 5, welche in Fig. 1 senkrecht zur Zeichenebene verläuft, an dem Karosserieteil 14 bzw. einem Haubenschloss 13 schwenkverstellbar gelagert. Zwischen der Schwenkachse 5 und der Fronthaube 2 ist wenigstens ein Knickgelenk 4 angeordnet, welches eine parallel zur Schwenkachse 5 verlaufende Knickachse 8 aufweist. Im Normalzustand (unterbrochene Linien) ist das Knickgelenk 4 in einem starren Sperrzustand, wohingegen es in der Ausweichstellung (durchgezogene Linien) in einem Freigabezustand ist, in dem es um seine Knickachse 8 beweglich ist.

Ebenfalls um die Schwenkachse 5 schwenkverstellbar gelagert ist ein vorderes Rahmenteil 15, welches zugleich als Kühlerverkleidung ausgebildet sein oder eine solche tragen kann. Zwischen dem vorderen Rahmenteil 15 und einem hinteren Rahmenteil 17 ist ein Bogen 16 angeordnet, dem im wesentlichen die Aufgabe zukommt, den vorderen Rahmen 15 dem hinteren Rahmen 17 zuzuführen und an dem entweder eine Betätigungseinrichtung 10 angeordnet sein kann oder der selbst Teil einer solchen ist.

Bei einem frontalen und mittigen Aufprall eines Fußgängers auf den Frontendbereich 1 eines Fahrzeugs, trifft dieser auf die Kühlerverkleidung, die den vorderen Rahmen 15 bildet oder an diesem angeordnet ist. Durch den Aufprall wird die Kühlerverkleidung bzw. das vordere Rahmenteil 15 um die Schwenkachse 5 nach hinten verschwenkt, wodurch der Bogen 16 verstellt wird. An dem Bogen 16 ist die Betätigungseinrichtung 10 angeordnet, die bei entsprechend starkem Verschwenken des vorderen Rahmens 15 bzw. bei entsprechend starkem Verstellen des Bogens 16 einen Schalter 12 betätigt, welcher einen elektromagnetischen Halter 9 steuert, oder die eine hier nicht gezeigte Sollbruchstelle bricht und dadurch das Knickgelenk 4 in seinen Freigabezustand überführt. Die Ausgestaltung mit einer Sollbruchstelle ist nicht Teil der vorliegenden Erfindung. Die Sollbruchstelle verhindert während des Normalzustands ein Verschwenken des Knickgelenks 4 um die Knickachse 8 und hält dadurch das Stützelement 3 in einem starren Sperrzustand und die Fronthaube 2 in ihrer Normalstellung. Erst bei Überschreiten eines vorbestimmten Schwellwertes der Aufprallkraft bricht die Sollbruchstelle und bewirkt den Freigabezustand und damit das Abknicken des Knickgelenks 4.

Bei der hier gezeigten Ausführungsform weist das Knickgelenk 4 den oben beschriebenen steuerbaren elektromagnetischen Halter 9 auf, der in einem ersten Schaltzustand das Knickgelenk 4, z.B. mit einem Riegel, sperrt und dieses in einem zweiten Schaltzustand frei gibt.

Des weiteren ist eine Antriebseinrichtung 11 vorgesehen, die zum Verstellen der Fronthaube 2 von der Normalstellung nach hinten in die Ausweichstellung dient und die zweckmäßig ebenfalls durch den Schalter 12 aktivierbar ist. Die Antriebseinrichtung 11 bewegt den hinteren Endbereich der Fronthaube 2 nach hinten und/oder nach oben. Gemäß Fig. 1 ist die Antriebseinrichtung 11 am hinteren Endbereich der Fronthaube 2 angeordnet, prinzipiell ist jedoch aber auch eine anderweitige Anordnung denkbar.

In gesperrtem Zustand des Knickgelenks 4 bildet die Stützeinrichtung 3 einen aussteifenden Rahmen, so dass es möglich ist, am unteren Endbereich der Stützeinrichtung 3 ein Haubenschloss 13 anzuordnen. Das Haubenschloss 13 ist dabei so ausgebildet, dass es bei verschlossener Fronthaube 2 die Schwenkverstellung der Stützeinrichtung 3, d.h. des vorderen Rahmenteils 15 und des hinteren Rahmenteils 17, um die Schwenkachse 5 ermöglicht.

Prinzipiell kann der Freigabezustand des Knickgelenks 4 auch durch Kontaktsensoren 19, welche beispielsweise in einem vorderen Stoßfänger 6 integriert sind, oder durch sogenannte Pre-Crash-Sensoren 20 bereits unmittelbar vor einem Aufprall bewirkt werden.

Des weiteren kann vorgesehen sein, dass Scheinwerfer oder Scheinwerferabdeckungen analog zur Kühlerverkleidung gelagert sind und bei einem Aufprall eines Fußgängers in ähnlicher Weise über eine weitere, nicht in Fig. 1 dargestellte, Betätigungseinrichtung 10 den Schalter 12 betätigen und damit über ein Entriegeln des elektromagnetischen Halters 9 das Knickgelenk 4 in den Freigabezustand überführen.

Im folgenden wird beispielhaft der Mechanismus der Vorrichtung bei der Kollision eines Fußgängers mit dem Kraftfahrzeug beschrieben.

Kollidiert ein Fußgänger mit dem in Fig. 1 nur teilweise dargestellten Kraftfahrzeug, so trifft er in Aufprallrichtung 7 auf den Frontendbereich 1 des Kraftfahrzeugs auf. Dabei wird das vordere Rahmenteil 15 um die Schwenkachse 5 in Richtung des hinteren Rahmensteils 17 verschwenkt. Das vordere Rahmenteil 15 kann dabei als Kühlerverkleidung ausgebildet sein oder eine solche tragen.

Die Betätigungseinrichtung 10, welche an dem Bogen 16 zwischen dem vorderen Rahmenteil 15 und dem hinteren Rahmenteil 17 angeordnet ist, betätigt gemäß Fig. 1 den Schalter 12, der den elektromagnetischen Halter 9 steuert, welcher das zwischen dem hinteren Rahmenteil 17 und der Fronthaube 2 angeordnete Knickgelenk 4 in seinen Freigabezustand überführt, so dass es um die Knickachse 8 beweglich ist. Gleichzeitig wird durch den Schalter 12 die Antriebseinrichtung 11 aktiviert, wodurch die Fronthaube 2 mit ihrem hinteren Endbereich nach hinten und/oder oben und mit ihrem vorderen Endbereich 18 nach hinten verstellt wird, so dass zusätzlicher Deformationsweg geschaffen wird.

Zusammenfassend lassen sich die wesentlichen Merkmale der Erfindung wie folgt charakterisieren:

Die Erfindung weist eine zwischen der Fronthaube 2 und dem Karosserieteil 14 angeordnete Stützeinrichtung 3 auf, welche an ihrem unteren Bereich um die Schwenkachse 5 schwenkverstellbar gelagert ist. Zwischen der Schwenkachse 5 und der Fronthaube 2 ist wenigstens ein Knickgelenk 4 angeordnet.

Zwischen dem vorderen Rahmenteil 15 und dem hinteren Rahmenteil 17 ist der Bogen 16 angeordnet, an dem die Betätigungseinrichtung 10 angeordnet oder der ein Teil derselben ist, die beim Aufprall den Schalter 12 betätigt, der einerseits den elektromagnetischen Halter 9 steuert und das Knickgelenk 4 in seinen Freigabezustand überführt und andererseits die Antriebseinrichtung 11 aktiviert, welche die Fronthaube 2 von der Normalstellung nach hinten in die Ausweichstellung verstellt, wodurch zusätzlicher Deformationsweg geschaffen und die Unfallfolgen für den Fußgänger reduziert werden.

## Patentansprüche

1. Kraftfahrzeug, insbesondere Personenkraftwagen, mit einer Fronthaube (2), die sich im geschlossenen Zustand an einem bezüglich der Fahrtrichtung vorderen Endbereich (18) mit einer Stützeinrichtung (3) des Fahrzeugs nach unten an einer Fahrzeugkarosserie (14) abstützt und die an einem bezüglich der Fahrtrichtung hinteren Endbereich an der Fahrzeugkarosserie (14) von einer Normalstellung nach hinten und/oder oben in eine Ausweichstellung verstellbar gelagert ist,
- wobei die Stützeinrichtung (3) an ihrem unteren Endbereich um eine horizontale und quer zur Fahrzeuglängsrichtung verlaufende Schwenkachse (5) an der Fahrzeugkarosserie (14) schwenkverstellbar gelagert ist,
- wobei die Stützeinrichtung (5) zwischen der Schwenkachse (5) und der Fronthaube (2) wenigstens ein Knickgelenk (4) aufweist, das eine parallel zur Schwenkachse verlaufende Knickachse (8) besitzt,
- wobei das wenigstens eine Knickgelenk (4) von einem Sperrzustand, in dem es starr ist, in einen Freigabezustand überführbar ist, in dem es um seine Knickachse (8) beweglich ist,
- wobei das Fahrzeug eine Betätigungseinrichtung (10) aufweist, die im Kollisionsfall das wenigstens eine Knickgelenk (4) in seinen Freigabezustand überführt, so dass beim Verstellen der Fronthaube (2) in deren Ausweichstellung sich deren vorderer Endbereich (18) nach hinten verstellt,
**dadurch gekennzeichnet,**
**dass** das Knickgelenk (4) einen steuerbaren elektomagnetischen Halter (9) aufweist, der in einem ersten Schaltzustand den Sperrzustand des Knickgelenks (4) und in einem zweiten Schaltzustand den Freigabezustand des Knickgelenks (4) bewirkt.

2. Vorrichtung nach Anspruch 1,
**dadurch gekennzeichnet,**
**dass** die Betätigungseinrichtung (10) einen Schalter (12) aufweist, mit dem der elektromagnetische Halter (9) steuerbar ist.

3. Vorrichtung nach Anspruch 1 oder 2,
**dadurch gekennzeichnet,**
**dass** eine Antriebseinrichtung (11) zum Verstellen der Fronthaube (2) vorgesehen ist.

4. Vorrichtung nach Anspruch 3,
**dadurch gekennzeichnet,**
**dass** die Antriebseinrichtung (11) durch einen Schalter (12) aktivierbar ist.

5. Vorrichtung nach einem der Ansprüche 1 bis 4,
**dadurch gekennzeichnet,**
**dass** ein Scheinwerfer oder eine Scheinwerferabdeckung des Fahrzeugs an ihrem unteren Endbereich um eine horizontale und quer zur Fahrzeuglängsrichtung verlaufende Schwenkachse an der Fahrzeugkarosserie (14) schwenkverstellbar gelagert ist.

6. Vorrichtung nach Anspruch 5 und nach Anspruch 2 oder 4,
**dadurch gekennzeichnet,**
**dass** der Scheinwerfer oder die Scheinwerferabdeckung beim Verschwenken den Schalter (12) zur Ansteuerung der Antriebseinrichtung (11) und/oder zur Ansteuerung des Halters (9) betätigt.

7. Vorrichtung nach einem der Ansprüche 1 bis 6,
**dadurch gekennzeichnet,**
**dass** eine Kühlerverkleidung des Fahrzeugs an ihrem unteren Endbereich um die Schwenkachse (5) an der Fahrzeugkarosserie oder an der Stützeinrichtung (3) schwenkverstellbar gelagert ist.

8. Vorrichtung nach Anspruch 7 und nach Anspruch 2 oder 4,
**dadurch gekennzeichnet,**
**dass** die Kühlerverkleidung beim Verschwenken den Schalter (12) zur Ansteuerung der Antriebseinrichtung (11) und/oder zur Ansteuerung des Halters (9) betätigt.

9. Vorrichtung nach einem der Ansprüche 1 bis 8,
**dadurch gekennzeichnet,**
**dass** die Stützeinrichtung (3) einen austeifenden Rahmen bildet.

10. Vorrichtung nach einem der Ansprüche 1 bis 9,
**dadurch gekennzeichnet,**
**dass** am unteren Endbereich der Stützeinrichtung (3) ein Haubenschloss (13) angeordnet ist.

11. Vorrichtung nach Anspruch 10,
**dadurch gekennzeichnet,**
**dass** die Schwenkachse (5) im oder durch das Haubenschloss (13) verläuft, wobei das Haubenschloss (13) so ausgebildet ist, dass es bei verschlossener Fronthaube (2) die Schwenkverstellung der Stützeinrichtung (3) um die Schwenkachse (5) ermöglicht.

12. Vorrichtung nach Anspruch 2 oder 4,
**dadurch gekennzeichnet,**
**dass** Kontaktsensoren (19) vorgesehen sind, die den Schalter (12) zur Ansteuerung der Antriebseinrichtung (11) und/oder zur Ansteuerung des Halters (9) betätigen.

13. Vorrichtung nach Anspruch 12,
**dadurch gekennzeichnet,**
**dass** die Kontaktsensoren (19) als Pre-Crash-Sensoren (20) ausgebildet sind.

## Claims

1. Motor vehicle, in particular passenger car, with a bonnet (2) which, in the closed position, is supported in the downward direction on the vehicle body (14) by a supporting device (3) of the vehicle at a front end section (18) relative to the direction of travel, and which is, at a rear end section relative to the direction of travel, mounted on the vehicle body (14) for rearward and/or upward adjustment from a normal position to an alternate position,
- wherein the supporting device (3) is, at its lower end section, mounted on the vehicle body (14) for pivoting about a horizontal swivel axis (5) extending at right angles to the longitudinal direction of the vehicle,
- wherein the supporting device (5) features at least one articulated joint (4) located between the swivel axis (5) and the bonnet (2) and having an articulation axis (8) running parallel to the swivel axis,
- wherein the at least one articulated joint (4) is capable of being transferred from a locking position, in which it is rigid, to a release position, in which it is movable about its articulation axis (8),
- wherein the vehicle is provided with an actuating mechanism (10) transferring the at least one articulated joint (4) to its release position in a collision, so that the front end section (18) is adjusted towards the rear when the bonnet (2) is moved to its alternate position,
**characterised in that**
the articulated joint (4) has a controllable electromagnetic retaining device (9) which effects the locking position of the articulated joint (4) in a first switching status and the release position of the articulated joint (4) in a second switching status.

2. Device according to claim 1,
**characterised in that**
the actuating mechanism (10) incorporates a switch (12) for the control of the electromagnetic retaining device (9).

3. Device according to claim 1 or 2,
**characterised in that**
a drive unit (11) is provided for the adjustment of the bonnet (2).

4. Device according to claim 3,
**characterised in that**
the drive unit (11) is capable of activation by a switch (12).

5. Device according to any of claims 1 to 4,
**characterised in that**
a headlight or a headlight cover of the vehicle is, at its lower end section, mounted on the vehicle body (14) for pivoting about a horizontal swivel axis extending at right angles to the longitudinal direction of the vehicle.

6. Device according to claim 5 and according to claim 2 or 4,
**characterised in that**
the pivoting headlight or headlight cover operates the switch (12) to trigger the drive unit (11) and/or to trigger the retaining device (9).

7. Device according to any of claims 1 to 6,
**characterised in that**
a radiator shield of the vehicle is, at its lower end section, mounted on the vehicle body or on the supporting device (3) for pivoting about the swivel axis (5).

8. Device according to claim 7 and according to claim 2 or 4,
**characterised in that**
the pivoting radiator shield operates the switch (12) to trigger the drive unit (11) and/or to trigger the retaining device (9).

9. Device according to any of claims 1 to 9,
**characterised in that**
the supporting device (3) forms a reinforcing frame.

10. Device according to any of claims 1 to 9,
**characterised in that**
a bonnet lock (13) is located at the lower end section of the supporting device (3).

11. Device according to claim 10,
**characterised in that**
the swivel axis (5) runs within or through the bonnet lock (13), the bonnet lock (13) being designed to allow the pivoting of the supporting device (3) about the swivel axis (5) when the bonnet (2) is closed.

12. Device according to claim 2 or 4,
**characterised in that**
contact sensors (19) are provided to operate the switch (12) to trigger the drive unit (11) and/or to trigger the retaining device (9).

13. Device according to claim 12,
**characterised in that**
the contact sensors (19) are designed as pre-crash sensors (20).

## Revendications

1. Véhicule automobile, en particulier voiture particulière, avec un capot avant (2) qui, lorsqu'il est fermé, s'appuie vers le bas, dans une zone d'extrémité (18) située à l'avant par rapport au sens de déplacement sur la carrosserie du véhicule (14), au moyen d'un dispositif de soutien (3) du véhicule automobile, et qui, dans une zone d'extrémité située à l'arrière par rapport au sens de déplacement, est monté sur la carrosserie du véhicule (14) de manière à pouvoir être déplacé vers l'arrière et/ou vers le haut, depuis une position normale, jusqu'à une position de dégagement,
- le dispositif de soutien (3) étant monté dans sa zone d'extrémité inférieure, sur la carrosserie du véhicule (14), de manière déplaçable en pivotement autour d'un axe de pivotement (5) s'étendant horizontalement et transversalement à la direction longitudinale du véhicule,
- le dispositif de soutien (3) comprenant entre l'axe de pivotement (5) et le capot avant (2) au moins une articulation de flexion (4) qui dispose d'un axe de flexion (8) s'étendant parallèlement à l'axe de pivotement,
- l'au moins une articulation de flexion (4) pouvant être amenée d'un état de verrouillage, dans lequel elle est rigide, dans un état de libération, dans lequel elle est mobile autour de son axe de flexion (8),
- le véhicule comprenant un dispositif d'actionnement (10) qui, en cas de collision, amène l'au moins une articulation de flexion (4) dans son état de libération, de telle sorte que, lors du déplacement du capot avant (2) dans sa position de dégagement, sa zone d'extrémité avant (18) se déplace vers l'arrière, **caractérisé en ce que** l'articulation de flexion (4) comprend un appui électromagnétique (9) pouvant être commandé qui, dans un premier état de commutation, provoque l'état de verrouillage de l'articulation de flexion (4) et qui, dans un deuxième état de commutation, provoque l'état de libération de l'articulation de flexion (4).

2. Dispositif selon la revendication 1, **caractérisé en ce que** le dispositif d'actionnement (10) comprend un commutateur (12) avec lequel peut être commandé l'appui électromagnétique (9).

3. Dispositif selon la revendication 1 ou 2, **caractérisé en ce qu'**un dispositif d'entraînement (11) pour le déplacement du capot frontal (2) est prévu.

4. Dispositif selon la revendication 3, **caractérisé en ce que** le dispositif d'entraînement (11) peut être activé par un commutateur (12).

5. Dispositif selon l'une quelconque des revendications 1 à 4, **caractérisé en ce qu'**un projecteur ou un couvre-projecteur du véhicule est, à sa zone d'extrémité inférieure, monté sur la carrosserie du véhicule (14) avec une possibilité de déplacement en pivotement autour d'un axe horizontal de pivotement s'étendant transversalement à la direction longitudinale du véhicule.

6. Dispositif selon la revendication 5 et selon la revendication 2 ou 4, **caractérisé en ce que**, lors de son pivotement, le projecteur ou le couvre-projecteur actionne le commutateur (12) pour l'activation du dispositif d'entraînement (11) et/ou pour l'activation de l'appui (9).

7. Dispositif selon l'une quelconque des revendications 1 à 6, **caractérisé en ce qu'**un enjoliveur de radiateur du véhicule est, à sa zone d'extrémité inférieure, monté sur la carrosserie du véhicule ou sur le dispositif de soutien (3) avec une possibilité de déplacement en pivotement autour de l'axe de pivotement (5).

8. Dispositif selon la revendication 7 et selon la revendication 2 ou 4, **caractérisé en ce que**, lors de son pivotement, l'enjoliveur de radiateur actionne le commutateur (12) pour l'activation du dispositif d'entraînement (11) et/ou pour l'activation de l'appui (9).

9. Dispositif selon l'une quelconque des revendications 1 à 8, **caractérisé en ce que** le dispositif de soutien (3) forme un cadre assurant un raidissement.

10. Dispositif selon l'une quelconque des revendications 1 à 9, **caractérisé en ce qu'**à la zone d'extrémité inférieure du dispositif de soutien (3) est disposée une serrure de capot (13).

11. Dispositif selon la revendication 10, **caractérisé en ce que** l'axe de pivotement (5) s'étend dans ou à travers la serrure de capot (13), la serrure de capot (13) étant configurée de telle façon que, lorsque le capot avant (2) est fermé, elle permette le déplacement du dispositif de soutien (3) en pivotement autour de l'axe de pivotement (5).

12. Dispositif selon la revendication 2 ou 4, **caractérisé en ce que** sont prévus des capteurs de contact (19) qui actionnent le commutateur (12) pour l'activation du dispositif d'entraînement (11) et/ou pour l'activation de l'appui (9).

13. Dispositif selon la revendication 12, **caractérisé en ce que** les capteurs de contact (19) sont configurés comme capteurs de pré-collision (20).
